# EUROPÄISCHE PATENTSCHRIFT

(11) **EP 1 953 430 B1**
(45) Veröffentlichungstag und Bekanntmachung des Hinweises auf die Patenterteilung: **28.10.2009**
(21) Anmeldenummer: 07002099.5
(22) Anmeldetag: 31.01.2007
(51) Int. Cl.: F16K 15/04

(54) **Hydraulik-Rückschlagventil**
Hydraulic check valve
Soupape de retenue

(43) Veröffentlichungstag der Anmeldung: 06.08.2008
(73) Patentinhaber: HAWE Hydraulik SE, 81673 München (DE)
(72) Erfinder: Neumair, Georg, 85402 Thalhausen (DE)
(74) Vertreter: Grünecker, Kinkeldey, Stockmair & Schwanhäusser Anwaltssozietät

(56) Entgegenhaltungen:
- EP-A- 1 701 032
- EP-A- 1 701 073
- EP-A- 1 712 821
- DE-A1- 19 739 904
- DE-U1-202006 011 061
- FR-A1- 2 720 468
- US-A- 4 977 927
- US-A1- 2004 069 351
- US-B1- 6 206 032

## Beschreibung

Die Erfindung betrifft ein Hydraulik-Rückschlagventil der im Oberbegriff des Patentanspruchs 1 angegebenen Art.

Bei dem aus US 4 977 927 A bekannten Hochdruck-Rückschlagventil zum Injizieren von Schmiermittel in ein Drucksystem ist die die Schließfeder mit einem Führungszapfen abstützende Scheibe in einen Innengewindeabschnitt des mit einem Außengewindeabschnitt versehenen Anschlussstutzens auf Block eingeschraubt. Die Scheibe ist zweifach an diametral gegenüberliegenden Seiten abgeflacht, sodass zwischen dem Innengewindeabschnitt und den Abflachungen Durchgänge begrenzt werden, deren Gesamtquerschnitt der Nennweite des Rückschlagventils entspricht. Der Ventilsitz ist direkt einstückig im Gehäuse innerhalb des Mutternabschnittes geformt. Die Nennweite des Rückschlagventils ist durch den im Anschlussstutzen mit dem großdurchmessrigen Außengewindeabschnitt zum Ventilsitz verlaufenden Innenkanal definiert. Die Ventillänge beträgt mehr als das 20-Fache der Nennweite. Der Schließkörper ist eine massive Stahlkugel.

Das aus DE 197 39 904 A bekannte Rückschlagventil dient als Einlassventil oder Auslassventil einer Kolbenpumpe und besitzt ein rohrförmiges Gehäuse mit einem radial überstehenden, umlaufenden Dichtbund an einem zuströmseitigen Ende, einem einstückig eingeformten Ventilsitz für eine Ventilkugel und axial verlaufende Führungsrippen für die Ventilkugel im abströmseitigen Innenbohrungsabschnitt. Die die Ventilschließfeder stützende Scheibe ist entweder nur axial mit örtlicher Verformung der Kämme der Führungsrippen in den abströmseitigen Innenbohrungsabschnitt eingepresst und durch die Pressung festgelegt oder mit ihrem kreisrunden Außenumfang unter elastischer Verformung der Führungsrippen dadurch in diese eingepresst, dass der die Scheibe enthaltende Endbereich des Gehäuses radial zusammengepresst ist. Das Gehäuse des Rückschlagventils ist durch Kaltschlagen aus Metall hergestellt, oder ist ein Kunststoffspritzteil. Der Ventilsitz kann nach dem Kaltschlagen des Gehäuses nachgeprägt sein. Die Scheibe ist ein Blechstanz- bzw. Blechprägeteil bzw. ein Kunststoffspritzteil. Das Rückschlagventil wird in einer fluidführenden Bohrung der Kolbenpumpe durch Verstemmen des Dichtbundes mit einer Presspassung montiert. Durch die Presspassung des Dichtbundes und die Presspassung der Scheibe ist eine kurze Ventillänge möglich.

Ein Hydraulik-Rückschlagventil der eingangs genannten Gattung ist auch aus dem Katalog 4100-6/DE, Seite 07 der Firma Parker, aus dem Februar 2004, bekannt (im Internet einsehbar unter: www.parker.com). Diese Hydraulik-Rückschlagventile sind universell einsetzbar, d.h. sie können mit jedem Außengewindeabschnitt beispielsweise in einen Ventil- oder Zylinderblock in eine dort vorgesehene Gewindebohrung eingeschraubt werden, oder in einer Rohr- bzw. Schlauchverbindung mittels einer Überwurfmutter festgelegt werden. Das bekannte Hydraulik-Rückschlagventil weist ein zweiteiliges Gehäuse auf. Die beiden Gehäuseteile sind unter Festlegen der Scheibe und Einsetzen des Schließkörpers und der Schließfeder miteinander verschraubt. Der den Ventilsitz enthaltende Gehäuseteil weist einen ersten Mutternabschnitt und zwei Außengewindeabschnitte auf, während der andere Gehäuseteil einen eigenen Muttemabschnitt, einen Außengewindeabschnitt und einen Innengewindeabschnitt besitzt. Die zweiteilige Gehäuseausbildung ist herstellungs- und bearbeitungstechnisch aufwendig, da jeder Gehäuseteil abgesehen von den zusätzlichen Gewindeabschnitten innenseitig genau bearbeitet werden muss. Jeder Gehäuseteil wird aus einem Sechskant-Profilabschnitt aus Stahl, Edelstahl oder Messing gearbeitet. Das zweiteilige Gehäuse bedingt eine unerwünscht große Baulänge, die mehr als das 6-Fache der Nennweite beträgt. Entsprechend groß ist der Einbauraum zum Installieren des Hydraulik-Rückschlagventils in axialer Richtung. Dazu ist auch der Einbauraum in radialer Richtung wegen der zwei Muttemabschnitten unerwünscht groß und werden zur Montage zumindest zwei Schraubenschlüssel benötigt, da die Mutternabschnitte unterschiedliche Schlüsselweiten haben.

Bei einem aus US 6 206 032 B1 bekannten Rückschlagventil mit einstückigem Gehäuse und einem Mutternabschnitt ist ein Anschlussstutzen mit Außengewinde und im anderen Ende des Gehäuses der zweite Anschlussstutzen mit einem Innengewinde vorgesehen. Die Nennweite des Rückschlagventils wird durch einen im Innen kanal in Öffnungs-Durchströmrichtung des Rückschlagventils zum Ventilsitz führenden Innenkanal definiert. Die Ventillänge beträgt mehr als das 10-Fache der Nennweite. Die die Schließfeder und einen Anschlagzapfen für das Schließelement tragende Scheibe ist mittels eines Sicherungsringes festgelegt.

Bei einer aus DE 20 2006 011 061 U1 bekannten Entlüftungsschraube mit Rückschlagventil wird das Gehäuse aus zwei ineinander verschraubten Teilen gefügt, sodass zwei axial beabstandete Mutternabschnitte benötigt werden. Die Nennweite wird durch einen Innenkanal definiert, der sich von einem Ende des Rückschlagventils in Öffnungs-Durchströmrichtung bis zum Ventilsitz erstreckt. Die Ventillänge beträgt mehr als das 23-Fache der Nennweite.

Der Erfindung liegt die Aufgabe zu Grunde, ein Hydraulik-Rückschlagventil der eingangs genannten Art für unterschiedliche Schraub-Anschlussarten anzugeben, das axial kurz ist.

Die gestellte Aufgabe wird mit den Merkmalen im Patentanspruch 1 gelöst.

Da das Gehäuse mit nur einem Mutternabschnitt zwischen den beiden Außengewindeabschnitten aus nur einem Sechskant-Profilabschnitt aus Stahl herstellbar ist, wird Baulänge eingespart und lassen sich die Herstellungskosten des Hydraulik-Rückschlagventils reduzieren. Dieses Konzept ermöglicht auch in Richtung zum Ventilsitz jeweils herstellungs- und bearbeitungstechnisch günstig abgestufte Innenbohrungsabschnitte. Bei gleicher Funktionalität werden Material und Einbauraum eingespart. Das Hydraulik-Rückschlagventil ist sowohl mit jedem Außengewindeabschnitt in einer Gewindebohrung eines Blocks montierbar, als auch mit einer Überwurfmutter in einer Rohr- bzw. Schlauchverschraubung festlegbar, wobei zum Manipulieren des Gehäuses nur ein Schraubenschlüssel benötigt wird. Die Länge beträgt zwischen den freien Enden der Anschlussstutzen höchstens das 4- bis 5,5-Fache der Nennweite. Die Nennweite des Rückschlagventils wird durch den Innenkanal definiert, der sich in Öffnungs-Durchströmrichtung des Rückschlagventils zum Ventilsitz erstreckt. Es wird entweder der Ventilsitz oder die Scheibe in einem offenen Ende des einen Anschlussstutzens durch Bördeln oder Verstemmen des Kragens montiert. Dabei ist der vor dem Außengewindeabschnitt ausgebildete Kragen, dessen Außendurchmesser kleiner ist als der Kerndurchmesser des Außengewindeabschnitts, einwärts gebördelt oder verstemmt. Der besitzt einen Innendurchmesser, der nahezu der doppelten Nennweite entspricht. Aufgrund dieses relativ großen Innendurchmessers kann die der Nennweite entsprechende Durchsatzrate z.B. mit bequem anzuordnenden Durchlässen in der Scheibe erzielt werden.

Wenn der Ventilsitz im offenen Ende des einen Anschlussstutzens festgelegt ist, kann die Scheibe im Mutternabschnitt des Gehäuses einstückig ausgebildet sein. Dies reduziert die Anzahl der Einzelteile.

Unterschiedliche Durchmesser der Außengewindeabschitte der Anschlussstutzen sind grundsätzlich vorteilhaft, um den Anwender anzuzeigen, in welcher Durchströmrichtung das Rückschlagventil sperrt. Um nun auch im Bereich der Scheibe bzw. des Ventilsitzes den der Nennweite entsprechenden Durchsatz sicherstellen zu können, ist es zweckmäßig, die Scheibe innerhalb des Außengewindeabschnittes mit dem größeren Durchmesser unterzubringen.

Im Hinblick auf die kurze Baulänge des Hydraulik-Rückschlagventils ist es zweckmäßig, wenn der Schließkörper eine Keramikkugel ist, und wenn an der Scheibe ein zentraler Anschlagbolzen für den Schließkörper vorgesehen ist, der den Öffnungshub begrenzt. Die Keramikkugel, die mit hoher Oberflächenpräzision kostengünstig verfügbar ist, spricht wegen ihres geringen Gewichts leichter an und trägt zur Gewichtsreduktion bei.

Bei einer zweckmäßigen Ausführungsform ist zumindest der Ventilsitz gehärtet. Hierzu bietet sich insbesondere eine Induktionshärtung an. Dies ermöglicht lange Standzeiten.

Herstellungstechnisch ist es günstig, wenn die Scheibe in Umfangsrichtung regelmäßig verteilte kreisrunde Durchlässe enthält, und ein zweiter Innenbohrungsabschnitt des Gehäuses bis zu dem Ventilsitz einen unrunden Querschnitt mit regelmäßigen Außensegmenten und zwischen diesen stehenden Vorsprüngen aufweist. Die Vorsprünge werden axial auf die Zwischenräume zwischen den Durchlässen in der Scheibe ausgerichtet, um günstige Strömungsverhältnisse sicherzustellen. Die Außensegmente werden von Bohrungsteilabschnitten begrenzt, deren Durchmesser dem Durchlassdurchmesser bzw. dem Nennweitendurchmesser entspricht. Dies ermöglicht die Verwendung von gleichen Bohr- oder Fräswerkzeugen, wie sie auch für die Durchlässe, den Nennweiten-Innenkanal, und dergleichen verwendet werden.

Schließlich ist es vorteilhaft, wenn der Anschlagbolzen durch einen Kanal durchsetzt ist, der auch die Scheibe durchsetzt. Dieser Kanal verhindert, dass sich die gegebenenfalls leichte Keramikkugel in der Offenstellung am Anschlagbolzen festsaugen könnte.

Anhand der Zeichnung wird der Erfindungsgegenstand erläutert. Es zeigen:

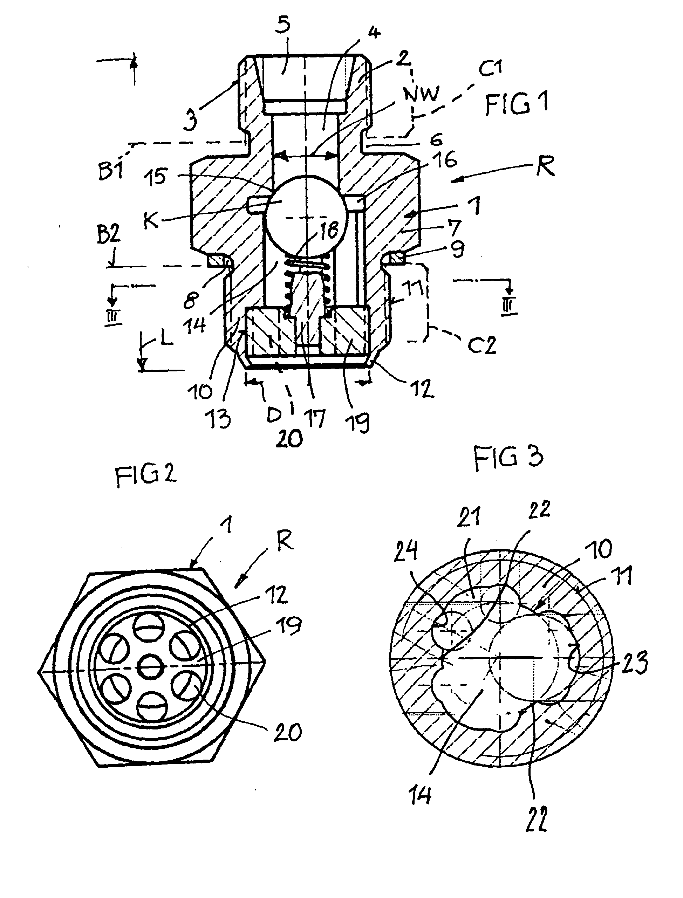

- Fig. 1: einen Längsschnitt einer erfindungsgemäßen Ausführungsform eines Hydraulik-Rückschlagventils,

Schließlich ist es vorteilhaft, wenn der Anschlagbolzen durch einen Kanal durchsetzt ist, der auch die Scheibe durchsetzt. Dieser Kanal verhindert, dass sich die gegebenenfalls leichte Keramikkugel in der Offenstellung am Anschlagbolzen festsaugen könnte.

Anhand der Zeichnung wird der Erfindungsgegenstand erläutert. Es zeigen:
- Fig. 1: einen Längsschnitt einer erfindungsgemäßen Ausführungsform eines Hydraulik-Rückschlagventils,
- Fig. 2: eine Ansicht zu Fig. 1, von unten,
- Fig. 3: einen Radialschnitt des Gehäuses des Hydraulik-Rückschlagventils von Fig. 1 in der Schnittebene III-III in Fig. 1,
- Fig. 4: eine weitere erfindungsgemäße Ausführungsform des Rückschlagventils mit umgekehrter Sperrrichtung, und

- Fig. 5, 6 und 7: drei weitere Ausführungsformen, jeweils in Längsschnitt.

Ein in den Fig. 1 bis 3 gezeigtes Hydraulik-Rückschlagventil R weist ein einstückiges Gehäuse 1, beispielsweise aus einem Sechskant-tahlprofilabschnitt, auf, der spanabhebend bearbeitet ist.

Das Gehäuse 1 besitzt einen kleineren Anschlussstutzen 2 mit einem Außengewindeabschnitt 3, in dem eine Innenbohrung 4 mit einem der jeweiligen Nennweite (NW) des Hydraulik-Rückschlagventils R entsprechenden Innendurchmesser zu einem Ventilsitz 15 führt. Am offenen Ende des Anschlussstutzens 2 ist eine beispielsweise kegelig aufgeweitete Stufenbohrung 5 gebildet. An den Innengewindeabschnitt 2 schließt sich eine Einschnürung 6, beispielsweise zum Platzieren eines Dichtelements, an, auf die ein Mutterabschnitt 7 mit dem Sechskant-Außenumriss des Profilabschnitts folgt. Auf den Mutterabschnitt 7 folgt eine weitere Einschnürung 8, beispielsweise zum Platzieren des gezeigten Dichtelements 9, auf die ein zweiter Anschlussstutzen 10 folgt, der einen größeren Außengewindeabschnitt 11 trägt, d.h. der Außendurchmesser des Anschlussstutzens 2 ist kleiner als der Außendurchmesser des Anschlussstutzens 10.

Am freien Ende des Anschlussstutzens 10 ist ein annähernd axialer Kragen 12 geformt, dessen Außendurchmesser geringer ist als der Kerndurchmesser des Außengewindeabschnitts 11. Am freien Ende des Anschlussstutzens 10 beginnt ein erster Innenbohrungsabschnitt 13, an den sich über eine Schulter ein weiterer Innenbohrungsabschnitt 14 anschließt, der bis zu dem Ventilsitz 15 bzw. einem diesem benachbarten Einstich 16 führt. Der Innenbohrungsabschnitt 13 hat im Gehäuse 1 den größten Innendurchmesser D, der nahe zu der doppelten Nennweite NW entspricht. In dem Innenbohrungsabschnitt 13 ist eine Scheibe 19 mit Durchlässen 20 festgelegt, und zwar durch Kaltverformen des Kragens 12 (Bördeln, Verstemmen, oder dgl.). Alternativ könnte die Scheibe 19 auch eingeklebt, eingepresst oder eingeschraubt oder durch ein Sicherungselement festgelegt sein.

Gemäß Fig. 2 enthält die Scheibe 19 sechs in regelmäßigen Umfangsabständen und innerhalb des Durchmessers des kaltverformten Kragens 12 liegende kreisrunde Durchlässe 20. Der Innenbohrungsabschnitt 14 ist gemäß Fig. 3 mit einem unrunden Querschnitt ausgebildet. Dieser unrunde Querschnitt wird definiert durch eine zentrale Bohrung und drei in regelmäßigen Umfangsabständen geformte Außensegmente 21, zwischen denen einwärtsragende Vorsprünge 22 vorgesehen sind. Die Vorsprünge 22 sind auf die Zwischenräume zwischen den Durchlässen 20 ausgerichtet und werden seitlich vom Bohrungsteilabschnitten 24 begrenzt, deren Durchmesser dem Durchmesser der Durchlässe 20 entspricht. Zwischen diesen Bohrungsteilabschnitten ist jeweils ein Bohrungsteilabschnitt 22 vorgesehen, dessen Durchmesser der Nennweite NW entspricht.

Dem Ventilsitz 15, der mit einer kegligen Sitzfläche von nur wenigen zehntel Millimeter Breite ausgebildet sein kann, und der zweckmäßig gehärtet ist (Induktionshärtung), ist als Schließkörper K eine Kugel zugeordnet, zweckmäßig eine Keramikkugel. Der Durchmesser des Ventilsitzes 15 bzw. die Nennweite betragen etwa 80 % des Kugeldurchmessers. Die Länge L des Gehäuses beträgt etwa das 4- bis 5,5-Fache der Nennweite NW, konkret vorzugsweise etwa das 4,75- bis 5,2-Fache der Nennweite NW. Die Scheibe 19 trägt zentral einen Anschlagbolzen 17, der den Öffnungshub des Schließkörpers begrenzt und der von einer Schließfeder 18 umgeben ist, die sich an der Scheibe 19 einerseits und am Schließkörper K andererseits abstützt. Der Anschlagzapfen 17 ist entweder in die Scheibe 19 eingesetzt oder mit dieser einstückig.

Das Hydraulik-Rückschlagventil R lässt sich mit jedem Außengewindeabschnitt 3 bzw. 11 wahlweise entweder in einer Innengewindebohrung eines Blocks (Gewindeanschluss B1 oder B2, gestrichelt angedeutet in der linken Hälfte in Fig. 1) oder in einem Rohr- oder Schlauchanschluss C1, C2 (in Fig. 1 an der rechten Seite gestrichelt angedeutet), und dort mit einer Überwurfmutter festlegen. Im Regelfall wird an einem Anschlussstutzen 2 oder 10 ein Rohr- oder Schlauchanschluss C1, C2 gebildet, und am anderen Anschlussstutzen 10 bzw. 2 eine Verbindung in einer Innengewindebohrung (Schraubanschluss B1, B2) oder es werden an beiden Anschlussstutzen 2, 10 Rohr- bzw. Schlauchanschlüsse C1 und C2 hergestellt.

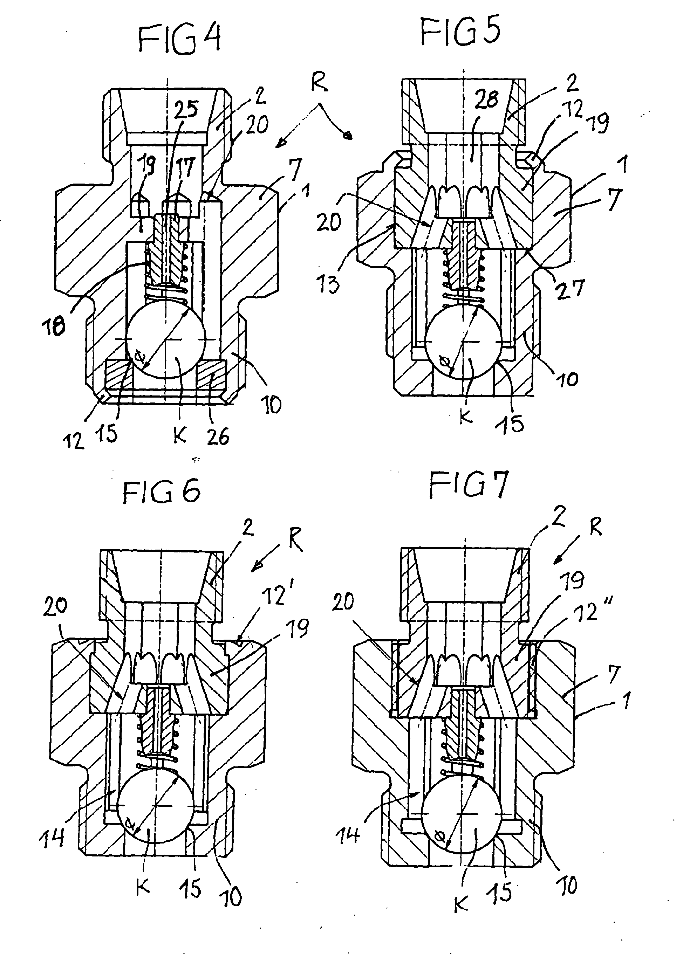

Die in Fig. 4 gezeigte Ausführungsform des Hydraulik-Rückschlagventils R weist ein einstückiges Gehäuse 1 entsprechend Fig. 1 auf, wobei hier die Sperrrichtung umgekehrt ist wie in Fig. 1. Der Ventilsitz 5 befindet sich in einem Einsatzring 26, der im offenen Ende des Anschlussstutzens 10 beispielsweise durch Bördeln des Kragens 12 festgelegt ist. Die Scheibe 19 ist einstückig im Mutterabschnitt 7 mit ihren Durchlässen 20 ausgebildet und stützt den Anschlagzapfen 17 für die Schließfeder 18 und den Schließkörper K ab. Im Anschlagzapfen 17 ist ein Längskanal 25 vorgesehen, der verhindert, dass sich die Keramikkugel K in der Offenstellung (Durchströmrichtung von unten nach oben in Fig. 4) festsaugt.

Die Ausführungsformen des Hydraulik-Rückschlagventils R in den Fig. 5, 6 und 7 haben die gleiche Sperrrichtung wie in Fig. 4. Das Gehäuse 1 ist kürzer als in den Fig. 1 bis 4. Die Scheibe 19 ist im Mutterabschnitt 7 durch beispielsweise Bördeln des Kragens 12 (in Fig. 5) oder durch Verstemmen bei 12' in Fig. 6, oder mittels einer Schraubverbindung 12" in Fig. 7 festgelegt, und mit dem Anschlussstutzen 2 mit dem kleineren Außendurchmesser einstückig ausgebildet. In der Scheibe 19 ist ein Innensechskant 28 vorgesehen, der beispielsweise bei der Ausführungsform in Fig. 7 zum Einschrauben der Scheibe 19 bis zum Anschlag an einer Schulter 27 verwendbar ist. In den Fig. 5 bis 7 verlaufen die Durchlässe 20 (hier beispielsweise fünf) vom Innensechskant 28 in Richtung zur Keramikkugel K schräg nach außen bis in den unrunden Bohrungsabschnitt 14. Der Ventilsitz 5 ist im offenen Ende des anderen Anschlussstutzens 10 eingearbeitet. Die Länge des in den Fig. 4 bis 7 gezeigten Hydraulik-Rückschlagventils kann bei einer Nennweite von 8,0 mm etwa 39 bis 41,5 mm betragen.

## Patentansprüche

1. Hydraulik-Rückschlagventil (R), mit einem Gehäuse (1), in dem benachbart zu einem Ventilsitz (15) ein axial beweglicher Schließkörper (K), eine Schließfeder (18) und eine dem Ventilsitz (15) abgewandte, die Schließfeder (18) stützende Scheibe (19) mit Durchlässen (20) angeordnet sind, wobei das Gehäuse (1) zwei koaxiale Anschlussstutzen (2, 10) jeweils mit einem Innenkanal (4) und einem Außengewindeabschnitt (2, 11) sowie zwischen den Außengewindeabschnitten einen Mutternabschnitt (7) aufweist, und wahlweise mit jedem Außengewindeabschnitt (2, 11) entweder in einem Rohr- bzw. Schlauchanschluss (C1, C2) oder in einem Einschraubanschluss (B1, B2) festlegbar ist, wobei zumindest ein in Öffnungs-Durchströmrichtung des Rückschlagventils zum Ventilsitz (15) führender Innenkanal (4) eine bestimmte Nennweite (NW) des Rückschlagventils definiert, **dadurch gekennzeichnet, dass** im aus Stahl bestehenden Gehäuse (1) am freien Ende des Anschlussstutzens (10) bis zu einer Schulter ein erster Innenbohrungsabschnitt (13) vorgesehen ist, dessen Innendurchmesser nahezu der doppelten Nennweite (NW) entspricht, dass am freien Ende des Anschlussstutzens (10) ein annähernd axialer Kragen (12) geformt ist, dessen Außendurchmesser geringer ist als der Kerndurchmesser des Außengewindeabschnitts (11) des Anschlussstutzens (10), dass entweder die Scheibe (19) oder ein den Ventilsitz (15) aufweisender Einsatzring (16) durch Bördeln oder Verstemmen des Kragens (12) in dem ersten Innenbohrungsabschnitt (13) an der Schulter festgelegt ist, und dass die Ventillänge (L) höchstens der 4-bis 5,5--Fachen Nennweite (NW) entspricht.

2. Hydraulik-Rückschlagventil gemäß Anspruch 1, **dadurch gekennzeichnet, dass** bei im offenen Ende des einen Anschlussstutzens (10) montiertem Ventilsitz (15) die Scheibe (19) im Mutternabschnitt (7) des Gehäuses (1) einstückig ausgebildet ist.

3. Hydraulik-Rückschlagventil gemäß Anspruch 1, **dadurch gekennzeichnet, dass** der Schließkörper (K) eine Keramikkugel ist.

4. Hydraulik-Rückschlagventil gemäß Anspruch 1, **dadurch gekennzeichnet, dass** der Ventilsitz (15) gehärtet, vorzugsweise induktionsgehärtet, ist.

5. Hydraulik-Rückschlagventil nach wenigstens einem der vorhergehenden Ansprüche, **dadurch gekennzeichnet, dass** die im ersten Innenbohrungsabschnitt (13) montierte Scheibe (19) mehrere kreisrunde Durchlässe (20) enthält, und dass ein zwischen dem ersten Innenbohrungsabschnitt (13) und dem Ventilsitz (15) verlaufender, zweiter Innenbohrungsabschnitt (14) einen unrunden Querschnitt mit regelmäßig verteilten Außensegmenten (21) und zwischen diesen stehenden Vorsprüngen (22) aufweist, wobei die Vorsprünge (22) axial auf Zwischenräume zwischen den Durchlässen (20) in der Scheibe (19) ausgerichtet und die Außensegmente (21) von Bohrungsteilabschnitten (23, 24) begrenzt sind, deren Durchmesser jeweils dem Durchlassdurchmesser eines Durchlasses (20) bzw. der Nennweiten (NW) entspricht.

6. Hydraulik-Rückschlagventil gemäß Anspruch 1, **dadurch gekennzeichnet, dass** in der Scheibe (19) ein Schließkörper-Anschlagbolzen (17) montiert ist, der einen auch die Scheibe (19) durchsetzenden Kanal (25) enthält.

## Claims

1. Hydraulic check valve (R) comprising a housing (1) in which an axially movable closing body (K), a closing spring (18) and a disc (19), which disc (19) faces away from the valve seat (15) and supports the closing spring (18) and has apertures (20), are arranged adjacent to a valve seat (15), with the housing (1) having two coaxial connecting sockets (2, 10) each with an inner duct (4) and an outer thread section (2, 11), and also having a nut section (7) between the outer thread sections, and with it being possible for said housing (1) to be selectively fastened with each outer thread section (2, 11) either in a pipe or hose connector (C1, C2) or in a screw-in connector (B1, B2), with at least one inner duct (4), which leads to the valve seat (15) in the opening throughflow direction of the check valve, defining a certain nominal width (NW) of the check valve, **characterized in that**, in the steel housing (1), a first inner bore section (13) is provided at the free end of the connecting socket (10) as far as a shoulder, the inner diameter of which first inner bore section (13) corresponds to approximately double the nominal width (NW), **in that** an approximately axial collar (12) is formed at the free end of the connecting socket (10), the outer diameter of which collar (12) is smaller than the core diameter of the outer thread section (11) of the connecting socket (10), **in that** either the disc (19) or an insert ring (16) which has the valve seat (15) is fixed in the first inner bore section (13) against the shoulder by means of flanging or caulking of the collar (12), and **in that** the valve length (L) corresponds to at most 4 to 5.5 times the nominal width (NW).

2. Hydraulic check valve according to Claim 1,
**characterized in that,** if the valve seat (15) is mounted in the open end of the one connecting socket (10), the disc (19) is formed in one piece in the nut section (7) of the housing (1).

3. Hydraulic check valve according to Claim 1,
**characterized in that** the closing body (K) is a ceramic ball.

4. Hydraulic check valve according to Claim 1,
**characterized in that** the valve seat (15) is hardened, preferably by induction hardening.

5. Hydraulic check valve according to one of the preceding claims, **characterized in that** the disc (19) which is mounted in the first inner bore section (13) has a plurality of circular apertures (20), and **in that** a second inner bore section (14) which runs between the first inner bore section (13) and the valve seat (15) has a non-circular cross section with uniformly distributed outer segments (21) and projections (22) situated between said outer segments (21), with the projections (22) being aligned axially with intermediate spaces between the passages (20) in the disc (19), and with the outer segments (21) being delimited by bore sub-sections (23, 24) whose diameter corresponds in each case to the aperture diameter of an aperture (20) or to the nominal widths (NW).

6. Hydraulic check valve according to Claim 1,
**characterized in that** a closing body stop pin (17) is mounted in the disc (19), which closing body stop pin (17) comprises a duct (25) which also extends through the disc (19).

## Revendications

1. Soupape anti-retour hydraulique (R), comprenant un boîtier (1), dans lequel sont disposés au voisinage d'un siège de soupape (15) un corps d'obturation (K) mobile axialement, un ressort d'obturation (18) et un disque (19), opposé au siège de soupape (15) et supportant le ressort d'obturation (18) muni de passages (20), le boîtier (1) présentant deux tubulures de raccordement coaxiales (2, 10) dotées respectivement d'un canal intérieur (4) et d'une section de filetage extérieur (2, 11), ainsi qu'une section d'écrou (7) entre les sections de filetage extérieur, et pouvant être fixé sélectivement par chaque section de filetage extérieur (2, 11) soit dans un raccord de tuyau ou de tuyau flexible (C1, C2), soit dans un raccord vissé (B1, B2), au moins un canal intérieur (4), menant dans la direction d'ouverture de passage de la soupape anti-retour au siège de soupape (15) définissant une étendue nominale déterminée (NW) de la soupape anti-retour, **caractérisée en ce qu'**il est prévu une première section de perçage interne (13) dans le boîtier (1) constitué d'acier à l'extrémité libre de la tubulure de raccordement (10) jusqu'à un épaulement, dont le diamètre intérieur correspond à peu près au double de l'étendue nominale (NW), qu'un collet (12) approximativement axial est conformé à l'extrémité libre de la tubulure de raccordement (10), dont le diamètre extérieur est plus petit que le diamètre du noyau de la section de filetage extérieur (11) de la tubulure de raccordement (10), que soit le disque (19), soit une bague rapportée (16) présentant le siège de soupape (15), sont fixés sur l'épaulement par bordage ou matage du collet (12) dans la première section de perçage interne (13), et que la longueur de soupape (L) correspond au maximum à 4 à 5,5 fois l'étendue nominale (NW).

2. Soupape anti-retour hydraulique suivant la revendication 1, **caractérisée en ce que**, lorsque le siège de soupape (15) est monté dans l'extrémité ouverte de l'une des tubulures de raccordement (10), le disque (19) a une réalisation monobloc dans la section d'écrou (7) du boîtier (1).

3. Soupape anti-retour hydraulique suivant la revendication 1, **caractérisée en ce que** le corps d'obturation (K) est une bille en céramique.

4. Soupape anti-retour hydraulique suivant la revendication 1, **caractérisée en ce que** le siège de soupape (15) est durci, de préférence durci par induction.

5. Soupape anti-retour hydraulique suivant l'une au moins des revendications précédentes, **caractérisée en ce que** le disque (19) monté dans la première section de perçage interne (13) comporte plusieurs passages (20) circulaires, et qu'une seconde section de perçage interne (14), s'étendant entre la première section de perçage interne (13) et le siège de soupape (15), présente une section transversale en faux-rond avec des segments extérieurs (21) régulièrement répartis et des saillies (22) disposées entre ces derniers, les saillies (22) étant orientées axialement sur des espaces intermédiaires entre les passages (20) du disque (19) et les segments extérieurs (21) étant délimités par des sections de perçage partiel (23, 24), dont le diamètre correspond respectivement au diamètre de passage d'un passage (20) ou à l'étendue nominale (NW).

6. Soupape anti-retour hydraulique suivant la revendication 1, **caractérisée en ce qu'**un axe de butée (17) de corps d'obturation est monté dans le disque (19), qui comporte un canal (25) traversant également le disque (19).
